# EUROPÄISCHE PATENTSCHRIFT

(11) **EP 1 721 107 B1**
(45) Veröffentlichungstag und Bekanntmachung des Hinweises auf die Patenterteilung: **05.09.2007**
(21) Anmeldenummer: 05849518.5
(22) Anmeldetag: 23.12.2005
(51) Int. Cl.: F24J 2/52

(54) **MONTAGESYSTEM MIT GEWINDESTEIN**
THREADED SLIDER MOUNTING SYSTEM
SYSTEME DE MONTAGE A COULISSEAU FILETE

(30) Priorität: 10.01.2005 DE 102005001654; 10.01.2005 DE 102005001653
(43) Veröffentlichungstag der Anmeldung: 15.11.2006
(73) Patentinhaber: Conergy AG, 15834 Rangsdorf (DE)
(72) Erfinder: GENSCHOREK, Gido, 15834 Rangsdorf (DE)
(74) Vertreter: Kietzmann, Manfred
(86) Internationale Anmeldenummer: PCT/DE2005/002331
(87) Internationale Veröffentlichungsnummer: WO 2006/072230

(56) Entgegenhaltungen:
- EP-A- 0 905 795
- WO-A-20/04079775
- DE-A1- 10 113 667
- DE-C1- 19 727 302
- DE-U1- 8 801 554
- US-A1- 2004 221 524
- PATENT ABSTRACTS OF JAPAN Bd. 1999, Nr. 01, 29. Januar 1999 (1999-01-29) -& JP 10 266472 A (KUBOTA CORP), 6. Oktober 1998 (1998-10-06)

## Beschreibung

Die Erfindung betrifft ein Montagesystem aus AluminiumProfilen, welches sich besonders zur Befestigung von Solarmodulen eignet und bei dem insbesondere zur Befestigung der Solarmodule und Dachhalterungen in die Profile eingesetzte Gewindesteine genutzt werden.

Von den Herstellern bzw. den Lieferanten der Solarmodule werden zumeist speziell an die Module angepasste Trägersysteme hergestellt, die relativ teuer sind und an den speziellen Einsatzfall angepasst sein müssen. Herkömmliche Trägersysteme erfordern einen hohen Montageaufwand, was zur Folge hat, dass die Trägersysteme und die Montage der Module den Gesamtpreis von derartigen Anlagen erheblich erhöhen.

Es besteht daher ein erheblicher Bedarf an der Bereitstellung eines Montagesystems bzw. eines Montageprofils, welches zusammen mit unterschiedlichen Modulen einsetzbar ist, den Montageaufwand deutlich reduziert, eine den Sicherheitsvorschriften gerecht werdende Befestigung der Module ermöglicht und über einen langen Zeitraum eine präzise, Beschädigung vermeidende Befestigung der Module sicherstellt. Außerdem besteht der Bedarf an einem Montageprofil, welches zum Aufbau von Montagessystemen für Module an verschiedenen Einsatzorten geeignet ist, insbesondere zur Befestigung dieser auf Dächern, an Fassaden und an frei stehenden Anlagen.

Zur Lösung dieser Problemstellungen wird in der DE 101 32 557 Al ein Montageprofil zur Befestigung von Photovoltaik-Modulen umfassend:
einen langgestreckten, quaderförmigen Grundkörper; einen zahnförmig ausgebildeten Oberflächenabschnitt an zumindest einer Seitenfläche des Grundkörpers; einen seitlichen Schraubkanal, der im wesentlichen parallel zur Längsachse an zumindest einer Seitenfläche des Grundkörpers verläuft; mindestens einen Entwässerungskanal, der zur Oberseite geöffnet in Längsrichtung im Grundkörper verläuft und einen oberen Schraubkanal, der im wesentlichen parallel zur Längsachse an der Oberseite des Grundkörpers zwischen den zwei Dichtungsstreifen verläuft, vorgeschlagen.

Notwendig bei dieser Lösung sind exakt vorbereitete Montageprofile oder deren Anpassung Vorort. Beides ist nicht optimal für die Montage, die ja unter erschwerten Bedingungen auf dem Dach oder auf Gerüsten an der Fassade erfolgt.

Auch vorangegangene Lösungsvorschläge weisen in Bezug auf die Montagefreundlichkeit Nachteile auf.

So wird in der DE 34 23 227 A1 eine Haltevorrichtung für Sonnenkollektoren beschrieben, die mehrere Halterungen aufweist, die aus einem Befestigungsprofil und einer Halteplatte gebildet sind. Ferner gehören zu der Haltevorrichtung wenigstens zwei Halteschienen, die entlang den Befestigungsprofilen der Halterung verschiebbar und festlegbar sind und ihrerseits in ihrer Längsrichtung verstellbare und festlegbare Befestigungselemente für den mittelbaren oder unmittelbaren Angriff an dem Sonnenkollektor aufnehmen können. Vor allem bei der Verwendung von wiederum quer zu den Halteschienen verlaufenden Verankerungsschienen sollten sich stabile, in beliebiger Richtung justierbare Rahmen, an denen Sonnenkollektoren verankert werden können ergeben.

Nachteilig bei diesem System sind die Vielzahl zu verschraubender Schienen, die fehlende Justierungsmöglichkeit gegenüber der Dachfläche und die gewählte Befestigung.

Der in der DE 91 09 605 U1 beschriebene Bausatz besteht aus mindestens vier, in die Dachlatten und Ziegel einhängbaren, in sich ein- und ausschiebbaren Haken, jeweils einer, einem Hakenpaar verschieblich zugeordneten Vertikalschiene und mindestens zwei, jeweils die nebeneinander angeordneten Vertikalschienen verbindenden und zu diesen verschieblich angeordneten Horizontalschienen, wobei die Solarmodule innerhalb der Horizontalschienen horizontal verschiebbar, einsetzbar und arretierbar sind. Der Bausatz bietet eine gewisse Flexibilität in der Dachebene, ist aber bedingt durch die gitterförmige Schienenanordnung hoch und durch die Anzahl der Verschraubungen aufwendig zu handhaben.

Das Kollektor-Schnell-Montagesystem nach DE 197 17 996 A1 sieht Dachhaken mit einer Rohrhülse als mechanisches Verbindungselement zwischen Dachkonstruktion und Sonnenkollektor vor. Die Dachhaken werden unter die Dachpfannen geschoben und an einer Dachlatte eingehakt und liegen ansonsten auf der Dachpfanne auf. Die Befestigung der Kollektoren erfolgt mittels Haltebügeln an den nach der Montage horizontal angeordneten Rohrhülsen, wobei die Haltebügel auf der Rückseite der Kollektoren nach vorheriger Vermessung der Abstände der Rohrhülsen angeschraubt werden. Nachteilig bei diesem Montagesystem sind insbesondere das notwendige maßgenaue Anbringen der Haltbügel und fehlende Korrekturmöglichkeiten.

Aus der EP 0 761 901 B1 ist eine Vorrichtung zur Befestigung von plattenförmigen Bauteilen, insbesondere von Solarmodulen und Sonnenkollektoren bekannt, bei der die plattenförmigen Bauteile in Längsrichtung, schuppenförmig übereinanderliegend, auf diesen angeordnet sind und das in Richtung der höherliegenden Seite oben liegende Bauteil mit seinem vorderen Ende das hintere Ende des darunterliegenden Bauteiles übergreift und die plattenförmigen Bauteile auf den Profilen, die in Längsrichtung, an im wesentlichen horizontal liegenden Gerüstteilen, wie Dachlatten, befestigt sind und mit ihrem unteren Ende in Haken eingehängt sind, wobei jedes Profil auf seiner oberen Seite zwei sich in dessen Längsrichtung erstreckende, seitliche Auflageflächen und eine zwischen diesen Auflageflächen liegende Vertiefung aufweist und dabei die Bauteile mit ihren seitlichen Rändern auf jeweils einer der Auflageflächen des Profils aufliegen und ein zwischen diesen frei bleibender Spalt über der Vertiefung angeordnet ist. Das. Profil ist dabei so ausgebildet, dass in den oberen Abschnitt eines Profils, der untere Abschnitt eines zweiten Profils einschiebbar ist und beide Abschnitte formschlüssig aneinander liegen.

Die Profile können auf eine beliebige Länge ineinander geschoben werden, wodurch Längendifferenzen ausgleichbar sind.

Dieser Hinweis, der trotz vielfältiger Bemühungen zur Schaffung montagefreundlicher und anpassungsfähiger Bausysteme unbeachtet blieb, soll nunmehr mit der vorliegenden Erfindung aufgegriffen werden.

Da als Trägerprofile in der Regel stranggepresste Aluminiumprofile eingesetzt werden, kommen als Verbindung Verschraubungen unter Nutzung vorgefertigten Bohrungen oder in den Trägerprofilen gleitend geführte Nutsteine zur Verschraubung zur Anwendung.

Eine solche/ Verbindung wird u. a. in der DE 34 23 227 A1 und der DE 299 19 147 U1 beschrieben. Die längsseitigen Nutsteine werden dabei in die Nut seitlich eingeschoben oder müssen nach dem Einsetzen in die Nut um 90° gedreht werden, um hinter den nach innen gekröpften Nutschenkeln Halt zu finden.
Neben dem Einsatz von derartigen Verschraubungen, wo der Nutstein parallele ebene Flächen an der Auflage und der gegenüberliegenden Fläche aufweist, sind auch Nutsteine bekannt, die gewölbt oder rundflächig (DE 299 11 401 U1) sind.

Ein einseitig halbrund geformter Nutstein, der durch die Rundung in eine Trägerprofilnut gekippt werden kann, wird durch die Firma SCHÜCO International KG, Bielefeld, DE angeboten. Dieser Nutstein wird mittels einer im Nutstein angeordneten federbelasteten Kugel nach dem Einsetzen fixiert.

Nachteile dieser Verbindungen sind je nach Ausführung u. a. im Wesentlichen das notwendige seitliche Einführen des Nutsteins, das nachträgliche Herstellen der Verbindung Nutstein/Spannbolzen, notwendige Drehungen des Nutsteins, um ihn in eine fixierbare Stellung zu bringen, die Fixierung vor dem Verschrauben durch zusätzliche Elemente, um nur die Wichtigsten zu nennen.

WO2004/079775 offenbart ein weiteres Montagesystem zur Befestigung von Solarmodulen.

Es ist Aufgabe der Erfindung, zur Montage von Solarmodulen unterschiedlichster Bemaßung Auflageprofilschienen mit Standardlängen kostengünstig einzusetzen und dabei zur Herstellung der Verbindungen zu den Solarmodulen und Dachbefestigungen Gewindesteine in den Profilschienen zu nutzen.

Gelöst wird diese Aufgabe mit den Merkmalen des Anspruches 1, vorteilhafte Ausgestaltungen sind Gegenstand der Unteransprüche.

Das erfindungsgemäße Montagesystem zur Befestigung von Solarmodulen umfasst in bekannter Weise mindestens zwei beabstandet angeordnete Montageprofilschienen mit jeweils einer Profilhöhe begrenzenden Auflage für den oder die Module, sowie einen unterhalb der Auflage befindlichen Anschluss für die Dachbefestigung. Zur Verschraubung der Befestigung für die Solarmodule und der Dachbefestigung werden jeweils in die Montageprofilschiene formschlüssig eingreifende Gewindesteine genutzt. Die Montageprofilschiene ist seitlich oder seitlich und unten mit Profilen versehen, die mit Profilen einer Verbindungsprofilschiene verbindbar sind, wobei zwischen den beiden Profilen nach dem Zusammenfügen Formschluss an mindestens zwei Punkten besteht und eine kraftschlüssige Verbindung herstellbar ist, wobei die Verbindungsprofilschiene vorzugsweise nach hergestelltem Formschluss mit der Profilhöhe der Montageprofilschiene oben abschließt, die mechanische Belastbarkeit der Verbindungsprofilschiene der der Montageprofilschiene angenähert oder gleich ist und mindestens ein als weiterer Abschnitt der Montageprofilschiene ausgebildetes Formstück über seine Profile mit den Profilen der Verbindungsprofilschiene verbindbar und fixierbar ist.

In einer bevorzugten Ausführung bilden das Profil der Montageprofilschiene und das Profil der Verbindungsprofilschiene eine ineinanderschiebbare Profilpaarung.

Zur Erläuterung sei darauf verwiesen, dass die Angaben zu den Profilen jeweils den Querschnitt betreffen, (U, Winkel, Zapfen) und dieser Querschnitt in der gleichen Weise entlang der Schienen ausgebildet ist.

Mit dem dargelegten grundsätzlichen Aufbau wird es ermöglicht, Montageprofilschienen mit Standardlängen wie z. B. 2,95 m oder 6 m einzusetzen und das fehlende Stück am Ende durch eine Verbindungsprofilschiene zu ersetzen. Da die Verbindung der beiden Schienen flexibel ist, wird eine exakte Bemaßung des Traggerüstes gewährleistet. Auf die Verbindungsprofilschiene sind dann wiederum Abschnitte der Montageprofilschiene, die jetzt als Formstücke bezeichnet werden können, aufsetz- oder aufschiebbar, so dass auch hinsichtlich der Befestigung der Solarmodule bzw. der Dachbefestigung systemgleich weitergearbeitet werden kann. Wichtig in diesem Zusammenhang ist die genannte angenäherte oder gleiche Belastbarkeit der Verbindungsprofilschiene mit der der Montageprofilschiene.

Zur Befestigung von Bauteilen an der Montageprofilschiene bzw. dem Formstück mittels Verschraubung sind Gewindesteine vorgesehen, die jeweils mit der Montageprofilschiene bzw. dem Formstück in eine formschlüssige Verbindung gebracht werden, indem sie zwischen zwei zur Gewindebohrung des Gewindesteines im Wesentlichen parallel und zueinander beabstandet angeordneten Stegen der Montageprofilschiene bzw. des Formstückes angeordnet sind und ein Steg am Ende eine Kröpfung aufweist, die über den Gewindestein greift, so dass der angeordnete Gewindestein auch seitlich von oben in der Bewegung begrenzt ist, unten der Gewindestein sich auf mindestens zwei weiteren Stegen der Montageprofilschiene bzw. des Formstückes abstützt, von denen ein Steg formschlüssig in den Gewindestein greift und so ebenfalls eine Bewegung weg vom Steg hemmt.

Von den abstützenden Stegen verläuft bei einer vorteilhaften Ausführung ein Steg im Wesentlichen parallel zu den seitlich begrenzenden Stegen und zwischen diesen in Montageprofilschienen- bzw. Formstücklängsrichtung, während der andere Steg als Auflagefläche für den Gewindestein senkrecht zu einem der seitlich begrenzenden Stege ausgebildet ist.

Der Gewindestein besitzt bevorzugt einen L-Querschnitt, wobei die Gewindebohrung den langen Schenkel des L-Querschnittes durchdringt und der kürzere Schenkel innen eine Ausnehmung zur Herstellung der Verbindung mit einem Stützsteg, .insbesondere formschlüssig mit dessen Kröpfung aufweist.

Dabei hat es sich bewährt, dass der lange Schenkel des L-Querschnittes im Bereich der Gewindebohrung verstärkt ist , so dass ein Ausreißen des Gewindes unter Last vermieden wird.

Darüber hinaus sieht eine vorteilhafte Ausführung vor, dass einer der abstützenden Stege auf der zur Achse der Gewindebohrung weisenden Seite ein Nasenprofil aufweist, das in das Gewinde des Bolzens, der in die Gewindebohrung gedreht wird, eingreift und beim Eindrehen des Bolzens leicht verformt wird. Das dient der schellen Fixierung des Gewindesteins.

Um nicht nur Befestigungsfunktionen für den Solarmodul zu realisieren, sondern auch die Dach- oder Fassadenbefestigung sieht eine weitere vorteilhafte Ausgestaltung vor, dass das erste Profil nochmals in gleicher Weise vorzugsweise um 90 versetzt oder gedreht zur Aufnahme eines oder weiterer Gewindesteine ausgebildet ist. Hier lassen sich dann die Dach-oder Fassadenbefestigungselemente anschrauben.

Die Erfindung soll an einem Ausführungsbeispiel erläutert werden. Es zeigen:
- Fig. 1:: Montageprofilschiene,
- Fig. 2:: Verbindungsprofilschiene,
- Fig. 3:: eine montierte Ansicht,
- Fig. 4:: einen Gewindestein
- Fig. 5:: die Anordnung der Gewindesteine in der Montageprofilschiene

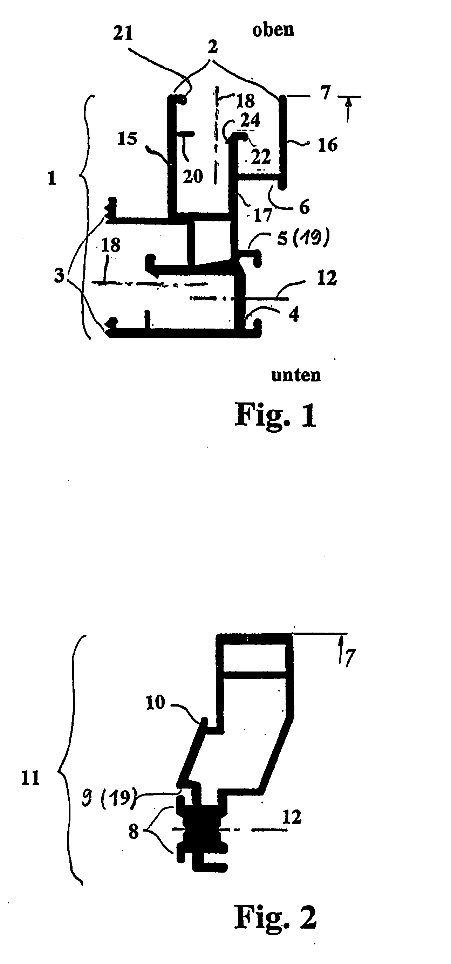

Fig. 1 zeigt eine Montageprofilschiene 1 mit jeweils einer die Profilhöhe 7 begrenzenden Auflage 2, einem unterhalb der Auflage 2 befindlichen Anschluss 3 für die Dachbefestigung und seitlich angeordnete Profile 4, 5, 6 für Profile 8, 9, 10 einer Verbindungsprofilschiene 11, wobei zwischen den Profilen 4, 5, 6 und den Profilen 8, 9, 10 nach dem Zusammenfügen Formschluss an mindestens zwei Punkten besteht und eine kraftschlüssige Verbindung 12 herstellbar ist. Die Profile 4, 5, 6 und 8, 9, 10 sind in der dargestellten Ausführung ineinanderschiebbar.

Die Verbindungsprofilschiene 11 ist in Fig. 2 dargestellt. Die ineinanderschiebbare Profilpaarung 4, 8 besteht dabei aus jeweils einem U-Profil, deren Schenkel einmal nach innen und einmal nach außen vorzugsweise um 90° gekröpft sind.

Das Profil 6 der Montageprofilschiene 1 und das Profil 10 der Verbindungsschiene 11, die ebenfalls eine ineinanderschiebbare Profilpaarung bilden, besteht einmal aus einem Winkel (Profil 6) und das passende andere Profil aus einem Zapfenprofil (Profil 10).

Darüberhinaus bilden das Profil 5 der Montageprofilschiene 1 und das Profil 9 der Verbindungsprofilschiene 11 jeweils außen ebene Auflageflächen 19, die nach der Montage aufeinander liegen.

Die kraftschlüssige Verbindung 12 zwischen der Montageprofilschiene 1 und der Verbindungsprofilschiene 11 wird durch eine durch die Verbindungsprofilschiene 11 im Bereich des Profils 8 geführte Schraube, die gegen die Montageprofilschiene 1 gepresst wird, gebildet. In der Verbindungsprofilschiene 11 ist dazu ein Gewinde eingebracht. Zur Erreichung entsprechender Festigkeitseigenschaften ist die Verbindungsprofilschiene 11 in diesem Bereich massiv ausgeführt, während sie im sonstigen Bereich als Kasten- oder Hohlprofil ausgeführt ist.
Die mechanische Belastbarkeit der Verbindungsprofilschiene 11 ist dabei der Montageprofilschiene 1 angenähert oder gleich.

Darüberhinaus ist es von Vorteil, wenn die Verbindungsprofilschiene 11 nach hergestelltem Formschluss mit der Profilhöhe 7 der Montageprofilschiene 1 oben abschließt. Das vergrößert die Auflagefläche.

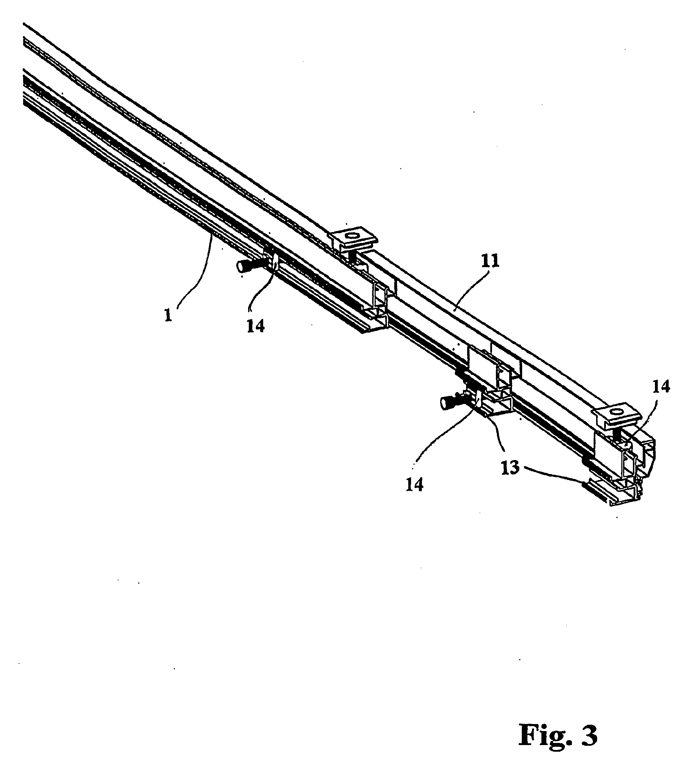

Fig. 3 zeigt in einer perspektivischen Ansicht die mit der Verbindungsprofilschiene 11 verlängerte Montageprofilschiene 1. Abschnitte der Montageprofilschiene 1 - hier Formstücke 13 - sind auf die Verbindungsprofilschiene 11 geschoben und kraftschlüssig befestigt worden. Das Montagesystem mit der Montageprofilschiene 1 wird so problemlos im Bereich der Verbindungsprofilschiene 11 weitergeführt und garantiert auch hier die entsprechenden Festigkeitseigenschaften bei genauester Anpassung an die Solarmodulgrößen.

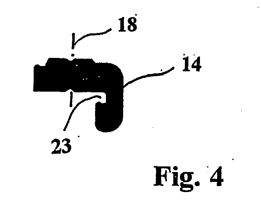

Fig. 4 zeigt einen in die Montageprofilschiene 1 bzw. das Formstück 13 formschlüssig einsetzbaren Gewindestein 14.
Der Gewindestein 14 wird zwischen zwei zur Gewindebohrung 18 im Wesentlichen parallel und zueinander beabstandet angeordneten Stegen 15, 16 der Montageprofilschienen 1 oder des Formstückes 13 angeordnet, wobei der Steg 15 am Ende eine Kröpfung 21 aufweist, die über den eingesetzten Gewindestein 14 greift, so dass der angeordnete Gewindestein 14 auch seitlich von oben in der Bewegung begrenzt ist.

Unten wird der eingesetzte Gewindestein 14 auf zwei weiteren Stegen 17, 20 der Montageprofilschiene 1 abstützt, von denen der Steg 17 formschlüssig mit seiner Kröpfung 22 in den Gewindestein 14 greift und so ebenfalls eine Bewegung weg vom Steg 17 hemmt. Der Steg 17 verläuft dabei parallel zu den Stegen 15, 16 und zwischen diesen.

Der Steg 20 als Auflagefläche für den eingesetzten Gewindestein 14 ist senkrecht zum Steg 15 verlaufend an diesem angeordnet.

Darüber hinaus weist der Steg 17 auf der zur Achse der Gewindebohrung 18 weisenden Seite ein Nasenprofil 24 auf, das in das Gewinde des Bolzens, der in die Gewindebohrung 18 gedreht wird, eingreift und beim Eindrehen des Bolzens leicht verformt wird. Die Bewegung des Gewindesteines 14 ist so nach einer Bolzendrehung bereits gehemmt.

Der Gewindestein 14 besitzt in der dargestellten Ausführung einen L-Querschnitt.

Die Gewindebohrung 18 ist im langen Schenkel des L-Querschnittes angeordnet und der kürzere Schenkel besitzt innen eine Ausnehmung 23 zur Herstellung der Verbindung mit dem Steg 17, insbesondere formschlüssig mit dessen Kröpfung 22.

Der lange Schenkel des L-Querschnittes ist im Bereich der Gewindebohrung 18 verstärkt, so dass ein Ausreißen des Gewindes unter Last vermieden wird.

Zur Montage wird ein Bolzen in den Gewindestein 14 gedreht. Dann erfolgt von oben schräg das Einsetzen des Gewindesteins 14 zwischen die Kröpfung 21 des Steges 15 und den Steg 20 und nachfolgend wird der kurze L-Schenkel des Gewindesteines 14 zwischen die Stege 17 und 16 geschoben. Mit einer kleinen Verschiebung in Richtung Steg 15 wird der Formschluss bzw. die Position für einen Formschluss zwischen der Kröpfung 22 des Steges und der Ausnehmung 23 am L-Schenkel des Gewindesteines 14 hergestellt.

Durch weiteres Eindrehen des Bolzens in die Gewindebohrung 18 greift das Gewinde auf das Nasenprofil 24 und der Gewindestein 14 ist für das spätere Verspannen fixiert. Die Darstellung zeigt, dass das Einbringen des Gewindesteines 14 in das Trägerprofil 1 auch unter Baustellenbedingungen problemlos und exakt möglich ist. Durch den vorab eingedrehten Bolzen ist der Gewindestein 14 gut handhabbar, das "Einfädeln" des Bolzens in die Gewindebohrung 18 Vorort entfällt.

Darüber hinaus ist der Gewindestein 14 ein einfach herzustellendes stranggepresstes und dann abgelängtes Formstück, das vorab mit einer Gewindebohrung 18 versehen ist.

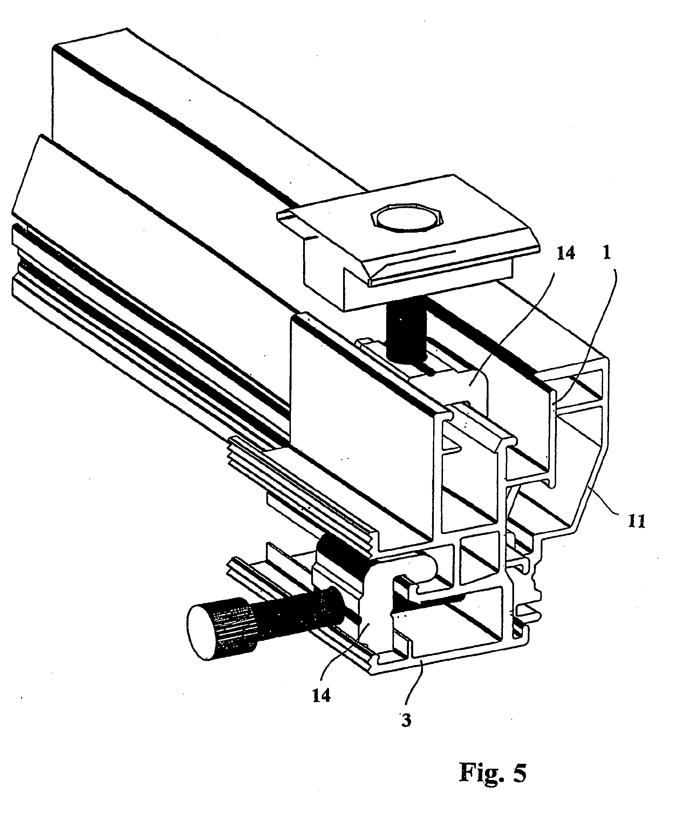

Fig. 5 zeigt im Trägerprofil 1 eingesetzte Gewindesteine 14. Das Trägerprofil 1 ist einmal oben für die Befestigung von Solarmodulen vorgesehen und noch einmal als Profil seitlich um 90° verdreht für die Anordnung einer Dach- oder Fassadenbefestigung.

### Bezugszeichenliste

- 1: Montageprofilschiene
- 2: Auflage
- 3: Anschluss für Dachbefestigung
- 4: Profil als U-Profil ausgebildet mit nach innen gekröpften Schenkeln
- 5: Auflagefläche bildendes Profil
- 6: Profil mit Winkel
- 7: Profilhöhe
- 8: Profil als U-Profil ausgebildet mit nach außen gekröpften Schenkeln
- 9: Auflagefläche bildendes Profil
- 10: Profil mit Zapfen
- 11: Verbindungsprofilschiene
- 12: kraftschlüssige Verbindung
- 13: Formstück
- 14: Gewindestein
- 15: Steg
- 16: Steg
- 17: Steg
- 18: Gewindebohrung
- 19: Auflagefläche
- 20: Steg
- 21: Kröpfung am Steg 15 oder 16
- 22: Kröpfung am Steg 17
- 23: Ausnehmung des Gewindesteins
- 24: Nasenprofil

## Patentansprüche

1. Montagesystem zur Befestigung von Solarmodulen umfassend mindestens 2 beabstandet angeordnete Montageprofilschienen (1) mit jeweils einer die Profilhöhe (7) begrenzenden Auflage (2) und einem unterhalb der Auflage (2) befindlichen Anschluss (3) für die Dachbefestigung, mindestens 2 Verbindungsprofilschienen (11), mindestens 2 als weitere Abschnitte der Montageprofilschienen (1) ausgebildete Formstücke (13) und mindestens 4 Gewindesteinen (14), wobei zur Verschraubung der Befestigung für die Solarmodule und der Dachbefestigung jeweils die in die Montageprofilschiene (1) formschlüssig eingreifenden Gewindesteine (14) genutzt werden, sowie mit seitlich oder seitlich und unten angeordneten Profilen (4, 5, 6) für Profile (8, 9, 10) der Verbindungsprofilschiene (11), wobei zwischen den Profilen der Montageprofilschienen (1) (4, 5, 6) und den Profilen (8, 9, 10) der Verbindungsprofilschienen (11) nach dem Zusammenfügen Formschluss an mindestens zwei Punkten besteht und eine kraftschlüssige.Verbindung (12) herstellbar ist, wobei die mechanische Belastbarkeit der Verbindungsprofilschiene (11) der der Montageprofilschiene (1) angenähert oder gleich ist und wobei mindestens ein Formstück (13) über seine Profile (4, 5, 6) mit den Profilen (8, 9, 10) der Verbindungsprofilschiene (11) verbindbar und fixierbar ist.

2. Montagesystem nach Anspruch 1, **dadurch gekennzeichnet, dass**
die Verbindungsprofilschiene (11) nach hergestelltem Formschluss mit der Profilhöhe (7) der Montageprofilschiene (1) oben abschließt.

3. Montagesystem nach Anspruch 1 oder 2, **dadurch gekennzeichnet, dass**
das Profil (4) der Montageprofilschiene (1) und das Profil (8) der Verbindungsprofilschiene (11) eine ineinanderschiebbare Profilpaarung bilden.

4. Montagesystem nach Anspruch 3, **dadurch gekennzeichnet, dass**
die ineinanderschiebbare Profilpaarung aus jeweils einem U-Profil, deren Schenkel einmal nach innen und einmal nach außen vorzugsweise um 90° gekröpft sind, besteht.

5. Montagesystem nach einem der Ansprüche 1 bis 4, **dadurch gekennzeichnet, dass**
das Profil (6) der Montageprofilschiene (1) und das Profil (10) der Verbindungsschiene (11) eine ineinanderschiebbare Profilpaarung bilden, wobei ein Profil, vorzugsweise das Profil (6) der Montageprofilschiene (1), aus einem Winkel besteht und das andere Profil aus einem Zapfenprofil (10).

6. Montagesystem nach einem der Ansprüche 1 bis 5, **dadurch gekennzeichnet, dass**
das Profil (5) der Montageprofilschiene (1) und das Profil (9) der Verbindungsprofilschiene (11) jeweils außen ebene Auflageflächen (19) sind und diese nach der Montage aufeinander liegen.

7. Montagesystem nach einem der Ansprüche 1 bis 6, **dadurch gekennzeichnet, dass**
die kraftschlüssige Verbindung (12) zwischen der Montageprofilschiene (1) und der Verbindungsprofilschiene (11) durch eine durch die Verbindungsprofilschiene (11) im Bereich des Profils (8) geführte Schraube, die gegen die Montageprofilschiene (1) gepresst wird, gebildet ist.

8. Montagesystem nach Anspruch 7, **dadurch gekennzeichnet, dass**
die Verbindungsprofilschiene (11) bis auf den Bereich, in dem die kraftschlüssige Verbindung (12) in Form einer Schraube sie durchdringt als Kasten- oder Hohlprofil ausgebildet ist.

9. Montagesystem nach Anspruch 7 oder 8, **dadurch gekennzeichnet, dass**
zur Herstellung der kraftschlüssigen Verbindung (12) die Verbindungsschiene (11) in diesem Bereich eine Bohrung mit Gewinde aufweist.

10. Montagesystem nach Anspruch 1, **dadurch gekennzeichnet, dass**
zur Befestigung von Bauteilen an der Montageprofilschiene (1) und/oder dem Formstück (13) mittels Verschraubung, die Gewindesteine (14) mit der Montageprofilschiene (1) und/oder dem Formstück (13) jeweils in eine formschlüssige Verbindung gebracht werden, indem der Gewindestein (14) zwischen zwei zur Gewindebohrung (18) im Wesentlichen parallel und zueinander beabstandet angeordneten Stegen (15, 16) der Montageprofilschiene (1) und/oder dem Formstück (13) angeordnet ist und ein Steg (15 oder 16) am Ende eine Kröpfung (21) aufweist, die über den Gewindestein greift, so dass der angeordnete Gewindestein (14) auch seitlich von oben in der Bewegung begrenzt ist, unten der Gewindestein (14) sich auf mindestens zwei weiteren Stegen (17, 20) der Montageprofilschiene (1) und/oder des Formstückes (13) abstützt, von denen ein Steg (17) formschlüssig in den Gewindestein (14) greift und so ebenfalls eine Bewegung weg von diesem Steg (17) hemmt.

11. Montagesystem nach Anspruch 10, **dadurch gekennzeichnet, dass**
der Steg (17) der formschlüssig in den Gewindestein (14) greift im Wesentlichen parallel zu den Stegen (15, 16) der Montageprofilschiene (1) und zwischen diesen in Montageprofilschienenlängsrichtung oder Formstücklängsrichtung verläuft, während der weitere Steg (20) als Auflagefläche für den Gewindestein (14) senkrecht zum Steg (15 oder 16) der Montageprofilschiene (1) verlaufend ausgebildet ist.

12. Montagesystem nach Anspruch 10 oder 11, **dadurch gekennzeichnet, dass**
die Montageprofilschiene (1) und/oder das Formstück (13) mit den Stegen (15, 16, 17) nochmals in gleicher Weise vorzugsweise um 90° versetzt oder verdreht zur Aufnahme eines oder weiterer Gewindesteine (14) ausgebildet ist.

13. Montagesystem nach einem der Ansprüche 10 bis 12, **dadurch gekennzeichnet, dass**
der Gewindestein (14) einen L-Querschnitt aufweist.

14. Montagesystem nach Anspruch 13, **dadurch gekennzeichnet, dass**
die Gewindebohrung (18) den langen Schenkel des L-Querschnittes durchdringt und der kürzere Schenkel innen eine Ausnehmung (23) zur Herstellung der Verbindung mit dem Steg (17) der formschlüssig in den Gewindestein (14) greift, insbesondere formschlüssig mit dessen Kröpfung (22) aufweist.

15. Montagesystem nach Anspruch 13 oder 14, **dadurch gekennzeichnet, dass**
der lange Schenkel des L-Querschnittes im Bereich der Gewindebohrung (18) verstärkt ist, so dass ein Ausreißen des Gewindes unter Last vermieden wird.

16. Montagesystem nach einem der Ansprüche 10 bis 15, **dadurch gekennzeichnet, dass**
der Steg (17 oder 20) auf der zur Achse der Gewindebohrung (18) weisenden Seite ein Nasenprofil (24) aufweist, das in das Gewinde des Bolzens, der in die Gewindebohrung (18) gedreht wird, eingreift und beim Eindrehen des Bolzens leicht verformt wird.

## Claims

1. A mounting system for fastening solar modules, comprising at least two spaced-apart profiled mounting rails (1) each having a support (2) defining the height (7) of the mounting rail profile and a connector (3) located below said support (2) for fastening said rail to a roof, at least two profiled connecting rails (11), at least two shaped parts (13) formed as further portions of said profiled mounting rails (1), and at least four threaded sliding blocks (14), said threaded sliding blocks (14), which engage the profiled mounting rail (1) in a form-fitting manner, being used to screw-fasten said profiled mounting rail to said solar modules as well as to a roof, and having profiles (4, 5, 6) arranged laterally or both laterally and at the bottom of said profiled mounting rail for profiles (8, 9, 10) of said profiled connecting rail (11), wherein there is a form-fitting connection at least at two points between said profiles (4, 5, 6) of said profiled mounting rails (1) and said profiles (8, 9, 10) of said profiled connecting rails (11) and a force-fitting connection (12) can be established once said profiles have been connected, wherein the mechanical load capacity of said profiled connecting rail (11) is approximately that or the same as that of said profiled mounting rail (1), and wherein at least one shaped part (13) can be connected and fixed, via its profiles (4, 5, 6), to said profiles (8, 9, 10) of said profiled connecting rail (11).

2. A mounting system according to claim 1, **characterized in that** said profiled connecting rail (11) is flush with said profile height (7) of said profiled mounting rail (1) on the upper side thereof once the form-fitting connection has been established.

3. A mounting system according to claim 1 or 2, **characterized in that** the connecting profile (4) of the profiled mounting rail (1) and the connecting profil (8) of the profiled connecting rail (11) form a telescopic profile pair.

4. A mounting system according to claim 3, **characterized in that** the connecting profiles of the telescopic profile pair each consist of a U-shaped section, with legs having bent ends are bent inward on one of the connecting profiles and outwardly on the other, wherein the legs have angles of bending of about 90°.

5. A mounting system according to one of claims 1 to 3, **characterized in that** the connecting profile (6) of the profiled mounting rail (1) and the connecting profile (10) of the profiled connecting rail (11) form a telescopic profile pair, wherein one of the connecting profiles, preferably the connecting profile (6) of the profiled mounting rail (1) has a lip shape and the other has a peg-shape (10).

6. A mounting system according to one of claims 1 to 4, **characterized in that** the connecting profile (5) of the profile mounting railed (1) and the connecting profile (9) of the profiled connecting rail (11) each form flat bearing surfaces (19) which are in contact after engagement of the rails and the establishment of a force-fit connection.

7. A mounting system according to one of claims 1 to 6, **characterized in that** the force-fit connection (12) between the profiled mounting rail (1) and the profiled connecting rail (11) is formed by a threaded fastener guided through the profiled connecting rail (11) in a region of the connecting profile (8), for forcing against the profiled mounting rail (1).

8. A mounting system according to claim 7, **characterized in that** the profiled connecting rail (11) is in the form of a box or hollow section, except for the region of force-fit connection (12) where the threaded fastener is guided through the profiled connecting rail (11).

9. A mounting system according to claim 7 or 8, **characterized in that** the connecting rail (11) further comprises a tapped bore for the fastener, to establish the force-fit connection (12).

10. A mounting system according to claim 1, **characterized in that** the profiled mounting rail (1) and/or the shaped part (13) further comprises retaining flanges (15, 16), wherein each threaded sliding block (14) is connected in a force fitting manner to the profiled mounting rail (1) and/or the shaped part (13) between two approximately vertical retaining flanges (15,16), wherein said approximately vertical retaining flanges (15,16) are arranged essentially spaced apart and parallel to a tapped bore in the threaded sliding block (14), wherein one of said approximately vertical flanges (15,16) has a terminal lip (21) which projects around the threaded sliding block (14), for laterally limiting upward movement of the arranged threaded sliding block (14), and wherein each threaded sliding block (14) is further supported by at least two supporting flanges (17, 20) on the profiled mounting rail (1) and/or the shaped part (13), one supporting flange (17) of which extends in a form-fitting manner into the threaded sliding block (14) for preventing the threaded sliding block moving away from the supporting flange (17).

11. A mounting system according to claim 10, **characterized in that** one (17) of the two supporting flanges (17, 20), which extends in a form fitting manner into the threaded sliding block (14), extends in between and essentially parallel to the approximately vertical flanges (15,16) in longitudinal direction of the profiled mounting rail (1), and wherein the other (20) of the two supporting flanges (17, 20) is a bearing surface for the threaded sliding block (14) extending at an approximately right angle to one of the two approximately vertical flanges (15 or 16) of the profiled mounting rail (1).

12. A mounting system, according to claims 10 or 11, **characterized in that** the profile portion of the mounting rail (1) and/or the shaped part (13) including the retaining and supporting flanges (15, 16, 17) are provided twice in the mounting rail or in the shaped part (13) at two different orientations, rotated to one another, preferably rotated at 90° to one another, for respectively accepting a separate threaded sliding block (14).

13. A mounting system according to claims any one of 10 or 12, **characterized in that** the threaded sliding block (14) has an L-shaped cross-section.

14. A mounting system according to claim 13, **characterized in that** the tapped bore (12) penetrates the long leg of the L-shaped cross-section and the shorter leg has a recess (23) for establishing the connection with the supporting flange (17), which extends in a formfitting manner into the threaded sliding block (14), preferably in a formfitting manner with its bend (22).

15. A mounting system according to claim 13 or 14, **characterized in that** the long leg of the L-shaped cross-section is reinforced in the area of the tapped bore (18) for preventing stripping of the thread under load.

16. A mounting system according to any one of claims 10 to 15, **characterized in that** one of the two supporting flanges (17 or 20) has a profiled projection (24) on the side pointing to the axis of the tapped bore (18) for engaging the thread of a bolt received in the tapped bore (18), the projection being deformable by the bold.

## Revendications

1. Système de montage pour la fixation de modules solaires comprenant au moins 2 profilés de montage (1) espacés entre eux, ayant chacun un appui (2) limitant la hauteur (7) de profilé et un raccord (3) disposé en-dessous de l'appui (2) pour la fixation sur un toit, au moins 2 profilés de liaison (11), au moins 2 pièces de forme (13) réalisées comme autres tronçons des profilés de montage (1), et au moins 4 coulisses taraudées (14), les coulisses taraudées (14) s'engageant par correspondance de forme dans les profilés de montage (1) étant utilisées pour le vissage de fixation des modules solaires et la fixation sur le toit, et ayant aussi des profils (4, 5, 6) disposés sur le côté, ou sur le côté et sur le bas pour des profils (8, 9, 10) du profilé de liaison (11), un accouplement mécanique étant obtenu et une liaison par adhérence (12) réalisable sur au moins deux points entre les profils (4, 5, 6) des profilés de montage (1) et les profils (8, 9, 10) des profilés de liaison (11) après assemblage, la résistance aux contraintes mécaniques du profilé de liaison (11) approchant celle du profilé de montage (1), ou étant égale à celle-ci, et au moins une pièce de forme (13) étant raccordable et fixable par ses profils (4, 5, 6) avec les profils (8, 9, 10) du profilé de liaison (11).

2. Système de montage selon la revendication 1, **caractérisé en ce que**
le haut du profilé de liaison (11) est de niveau avec la hauteur (7) du profilé de montage (1) une fois l'accouplement mécanique réalisé.

3. Système de montage selon la revendication 1 ou 2, **caractérisé en ce que**
le profil (4) du profilé de montage (1) et le profil (8) du profilé de liaison (11) forment des profils appariés coulissants l'un dans l'autre.

4. Système de montage selon la revendication 3, **caractérisé en ce que** les profils appariés coulissants l'un dans l'autre sont des profils en U dont les bras sont recourbés respectivement vers l'intérieur et vers l'extérieur, de préférence de 90 °.

5. Système de montage selon l'une des revendications 1 à 4, **caractérisé en ce que**
le profil (6) du profilé de montage (1) et le profil (10) du profilé de liaison (11) forment des profils appariés coulissants l'un dans l'autre, un profil, de préférence le profil (6) du profilé de montage (1), étant en cornière et l'autre profil en tenon (10).

6. Système de montage selon l'une des revendications 1 à 5, **caractérisé en ce que**
le profil (5) du profilé de montage (1) et le profil (9) du profilé de liaison (11) sont des surfaces d'appui (19) extérieurement planes reposant l'une contre l'autre après montage.

7. Système de montage selon l'une des revendications 1 à 6, **caractérisé en ce que**
la liaison par adhérence (12) entre le profilé de montage (1) et le profilé de liaison (11) est réalisée par une vis passant dans le profilé de liaison (11) au niveau du profil (8), serrée contre le profilé de montage (1).

8. Système de montage selon la revendication 7, **caractérisé en ce que**
le profilé de liaison (11) est réalisé comme profilé en caisson ou comme profilé creux à l'exception de la région où il est traversé par la liaison par adhérence (12) sous la forme d'une vis.

9. Système de montage selon la revendication 7 ou la revendication 8, **caractérisé en ce que**
le profilé de liaison (11) présente dans cette région un alésage fileté pour la réalisation de la liaison par adhérence (12).

10. Système de montage selon la revendication 1, **caractérisé en ce que**
pour la fixation par vissage de composants sur le profilé de montage (1) et/ou la pièce de forme (13), les coulisses taraudées (14) sont respectivement mécaniquement accouplées avec le profilé de montage (1) et/ou la pièce de forme (13), en disposant la coulisse taraudée (14) entre deux branches (15, 16) du profilé de montage (1) et/ou de la pièce de forme (13) sensiblement parallèles à l'alésage fileté (18) et espacées entre elles, et **en ce qu'**une branche (15, 16) présente un coude (21) à son extrémité, lequel s'enclenche sur la coulisse taraudée de manière que le déplacement de la coulisse taraudée (14) disposée soit aussi limité latéralement par le haut, que la coulisse taraudée (14) s'appuie par le bas sur au moins deux autres branches (17, 20) du profilé de montage (1) et/ou de la pièce de forme (13), dont une branche (17) s'engage par correspondance de forme dans la coulisse taraudée (14) en empêchant ainsi son éloignement de ladite branche (17).

11. Système de montage selon la revendication 10, **caractérisé en ce que**
la branche (17) s'engageant par correspondance de forme dans la coulisse taraudée (14) s'étend sensiblement parallèlement aux branches (15, 16) du profilé de montage (1) et entre celles-ci, dans la direction longitudinale du profilé de montage ou la direction longitudinale de la pièce de forme, alors que l'extension de la branche (20) est réalisée comme surface d'appui pour la coulisse taraudée (14) perpendiculairement à la branche (15 ou 16) du profilé de montage (1).

12. Système de montage selon la revendication 10 ou la revendication 11, **caractérisé en ce que**
les branches (15, 16, 17) du profilé de montage (1) et/ou de la pièce de forme (13) sont à nouveau préférentiellement décalées ou tournées de 90 ° de la même manière pour le logement d'une ou d'autres coulisses taraudées (14).

13. Système de montage selon l'une des revendications 10 à 12, **caractérisé en ce que**
la coulisse taraudée (14) présente une section transversale en L.

14. Système de montage selon la revendication 13, **caractérisé en ce que**
l'alésage fileté (18) traverse le bras long de la section en L, et le bras court comprend un évidement (23) intérieur pour la réalisation du raccord avec la branche (17) s'engageant par correspondance de forme dans la coulisse taraudée (14), en particulier par le coude (22) de celle-ci.

15. Système de montage selon la revendication 13 ou la revendication 14, **caractérisé en ce que**
le bras long de la section en L est renforcé dans la région de l'alésage fileté (18), ce qui empêche un foirage du filet sous contrainte.

16. Système de montage selon l'une des revendications 10 à 15, **caractérisé en ce que**
la branche (17 ou 20) présente un profil en mentonnet (24) sur le côté orienté vers l'axe de l'alésage fileté (18), lequel s'engage dans le filet du boulon vissé dans l'alésage fileté (18) et se déforme facilement au vissage du boulon.
